# EUROPEAN PATENT APPLICATION

(11) **EP 1 467 347 A2**
(43) Date of publication of application: **13.10.2004**
(21) Application number: 04251996.7
(22) Date of filing: 01.04.2004
(51) Int. Cl.: G09G 5/14

(54) **Window control system for a multi-application environment**

(30) Priority: 07.04.2003 JP 2003103484
(71) Applicant: NEC Corporation, Minato-ku, Tokyo 108-8001 (JP)
(72) Inventor: Asakura, Yoshiharu, c/o NEC Corporation, Tokyo 108-8001 (JP)
(74) Representative: Abnett, Richard Charles

(57) **Abstract**

The window control system for use in a multi-application computer environment includes a window manager (500). The windows control system includes a display control unit (550) which displays windows of each of a number of applications in accordance with a windows control tree stored in a storing unit (3020), a management window generating unit (550) which generates a management window for each of the applications, and a window control unit (540) which ranks the windows of the applications as children of the corresponding management windows in the window control tree. Thus, the windows of each application are controlled independently of the windows of the other applications.

## Description

### BACKGROUND OF THE INVENTION

The present invention relates to a window control system. More specifically, the present invention relates to a window control system for use in a multi-application environment that controls the display order of windows controlled by applications.

Conventionally in a computer system, in order not to upset the display order of windows controlled by an active application when the display order of windows controlled by inactive applications is changed, the following kinds of operations are necessary. For example, it may be necessary to control inactive applications so as not to have their windows move to a position above the windows controlled by the active application, or it may be necessary to control the window manager that controls the display order of the windows to scrutinize the generation of a new window by an inactive application and not to move the window generated by the inactive application to a position above the windows controlled by the active application.

In such a method of controlling multi-windows, it is disclosed in JP-A-H4-118,717 that when an application which was previously inactive is activated, the application notifies the fact to the window manager, and the window manager moves the windows controlled by that application to the uppermost level. At the same time, the window manager notifies the fact to an application which was previously active.

It is also disclosed in JP-A-H11-232,005 that a specified window can be displayed uppermost regardless of whether the window is active or inactive.

In the known window display control system, it was necessary to control the windows of the inactive applications so as not to allow them to affect the display of the windows of the active application even when the display order of the windows of the inactive applications is changed, as described above. Furthermore, it was necessary for the window manager to scrutinize changes in the display order or the generation of windows for inactive applications, in order not to have the windows of the inactive applications display above the windows of the active application.

Thus, there were problems such as the difficulty in controlling the display operation of the windows of the applications while satisfying the above rules. Furthermore, the load on the window manager became too large to operate window displays smoothly.

We have appreciated that a reason for the occurrence of such problems is that windows controlled by the inactive applications and windows controlled by the active applications are placed as brother windows in a window control tree which is controlled by the window manager. Therefore, the window manager has to control the display order of both the windows controlled by the inactive applications and the windows controlled by the active application.

In the previous applications JP-A-H4-118,717 and JP-A-H11-232,005, the window manager equally controls the windows of all the applications. Therefore, the window manager has to control the windows in such a way that the change of the display order of the windows of the inactive applications does not interfere with the display of the windows of the active application. This causes an overload on the operation of the window manager.

### SUMMARY OF THE INVENTION

According to the present invention, there is provided a window control system for use in a multi-application environment, comprising: display control means which displays windows of each of a number of applications in accordance with a window control tree; management window generating means which generates at least a management window for each of the applications in the window control tree; and window control means which ranks windows of the applications as descendants of a corresponding management window in the window control tree.

The window control system may further comprise window generating means which generates a window of for each of the applications and ranks the window as a child of a root window in the window control tree, and judging means which judges whether a management window of the application exists or not, when the window generating means generates a new window for one of the applications. The management window generating means may generate a new management window for the application when a management window does not exist, and the window control means may rank the new window as a descendant of the corresponding management window for the application.

The window control means may rank windows for each of the applications, regardless of whether they are active or inactive, as descendants of corresponding management windows.

The window control means may change the display order of the management windows when the active application is changed among a plurality of applications in such a way that the management window of the new active application is displayed in a position above the management windows for the rest of the applications.

A preferred embodiment of the present invention takes the form of a window control system in a multi-application environment, wherein a window manager that controls the windows of each of the applications in accordance with a window control tree generates a management window that controls windows for each of the applications and ranks the windows of the applications as child windows of a corresponding management window. The window manager controls the windows of each application independently from the windows of other applications.

When one of the applications generates a new child window of a root window, the window manager detects whether a management window for the application exists or not. When a management window exists, the window manager ranks the new child window as a child of the management window. On the other hand, when a management window does not exist, the window manager generates a new management window for each of the applications and ranks the newly generated child window as a child window of the management window.

When the window manager ranks the child window of the root window as a child of the corresponding management window, the window manager may rank the child window in any order among the descendants of the management window.

The window manager determines the display order of the windows controlled by each application. Each of the applications is independent of other windows controlled by other applications.

### BRIEF DESCRIPTION OF THE DRAWINGS

The present invention and many of the advantages thereof will be better understood from the following detailed description when considered in conjunction with the accompanying drawings, wherein:
Fig. 1 is a block diagram of a window control system embodying the present invention;
Fig. 2 is a schematic view of an example of a window control tree in the system of Fig. 1;
Fig. 3 is a schematic view of the display order of the windows of each of the applications;
Fig. 4 is a schematic view of another example of a window control tree in the system of Fig. 1;
Fig. 5 is a flowchart of the operation of the window manager in the system of Fig. 1;
Fig. 6 is a schematic view of another example of a window control tree in the system of Fig. 1;
Fig. 7 is a schematic view of another example of a window control tree in the system of Fig. 1;
Fig. 8 comprising Figs. 8A and 8B is a schematic view of another example of a window control tree in the system of Fig. 1;
Fig. 9 is a schematic view of the display order of the windows of each of the applications;
Fig. 10 is a schematic view of another example of a window control tree in the system of Fig. 1; and
Fig. 11 is a schematic view of another example of a window control tree in the system of Fig. 1.

### DETAILED DESCRIPTION OF THE PREFERRED EMBODIMENTS

The specific constitutions of an embodiment of the present invention will be described below in detail by referring to the attached drawings. In each of the drawings, each of the elements of the semiconductor device will be exaggerated, for the purpose of easily understanding of the present invention.

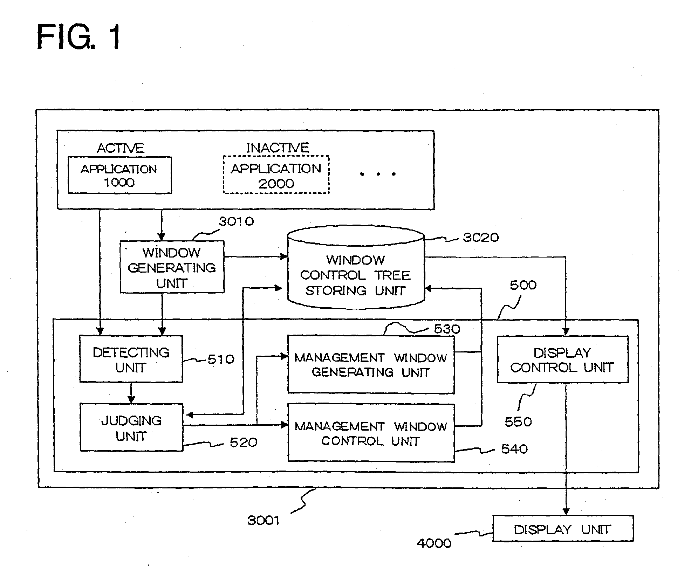

As shown in Fig. 1, the window control system 3001 according to the present embodiment of the present invention includes a window manager 500, an active application 1000, an inactive application 2000, a window generating unit 3010, and a window control tree storing unit 3020. The window manager 500 includes a detecting unit 510, a judging unit 520, a management window generating unit 530, a management window control unit 540, and a display control unit 550. The display control unit 550 controls displays displayed on a display unit 4000 such as a monitor.

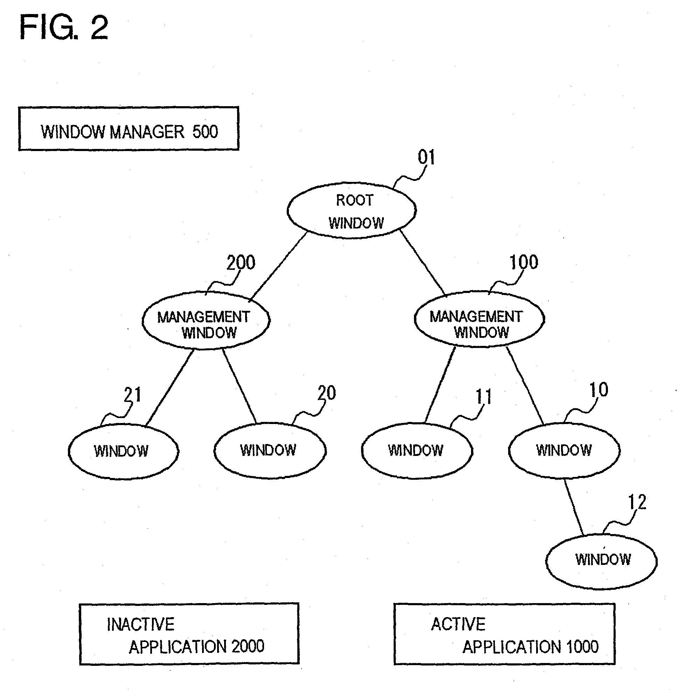

Fig. 2 shows an example of the window control tree stored in the window control tree storing unit 3020. The window manager 500 controls the windows of each application in accordance with the window control tree shown in Fig. 2. In this embodiment, the window manager 500 only controls the display order between management windows of the applications.

As shown in Fig. 2, the window control tree includes a root window 01 as a root of the tree, a window 10, a window 11, and a window 12 which are controlled by the active application 1000, a window 20, and a window 21 which are controlled by the inactive application 2000, a management window 100 for the active application 1000, and a management window 200 for the inactive application.

Referring back to Fig. 1, the management window generating unit 530 of the window manager 500 generates and deletes management windows of the applications in the window control tree. The window control unit 540 of the window manager 500 controls the display order of the management windows. For example, when the application 2000 which was previously inactive becomes active and the application 1000 which was previously active becomes inactive, the window control unit 540 changes the display order of the management windows 100 and 200. With this change, the display order of their respective child windows automatically changes.

The management window 100 and the management window 200 are set as children of the root window 01. The window 10 and the window 11 are set as children of the management window 100. The window 12 is set as a child of the window 10. The window 20 and the window 21 are set as children of the management window 200.

The root window 01 is a base window (a WINDOWS (registered trademark) desktop window, for example) within which windows of each of the applications are displayed. Thus, the management window 100, the window 10, the window 11 and the window 12 of the active application 1000, and the management window 200, the window 20 and the window 21 of the inactive application 2000 are displayed within the root window 01.

The management window of each of the applications is a characteristic component of the system. The management window generating unit 530 generates the management windows for each application. The management window controls the windows of each of the applications. The windows 10 to 12 of the application 1000 are displayed within the management window 100, and the windows 20 and 21 of the application 2000 are displayed within the management window 200.

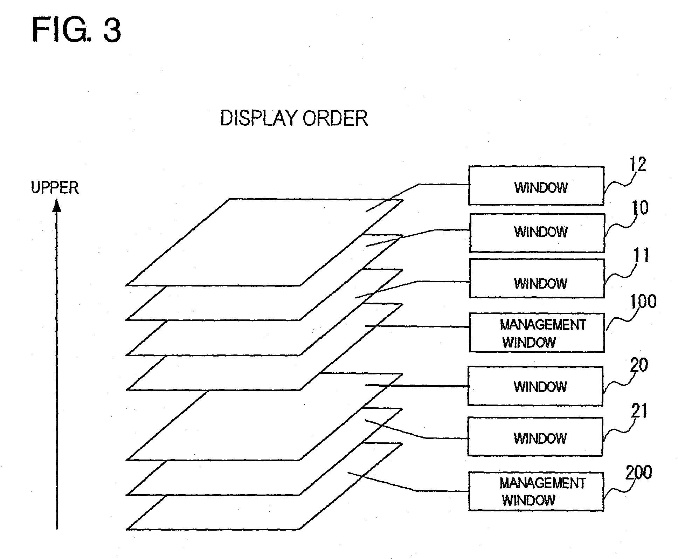

Here, it is assumed that brother windows belong to the same application, for example windows 10 and 11, or windows 20 and 21, and an upper level window is placed to the right of a lower level window in the tree shown in Fig. 2. The display control unit 550 displays the windows on the display unit 4000 in accordance with the tree in a similar manner. Thus, the windows shown in Fig. 2 are displayed on the display unit 4000 in the order as shown in Fig. 3. As shown in Fig. 3, the management window 100 is displayed above the management window 200. The windows 12, 10, and 11, which belong to the management window 100, are displayed above the windows 20 and 21, which belong to the management window 200.

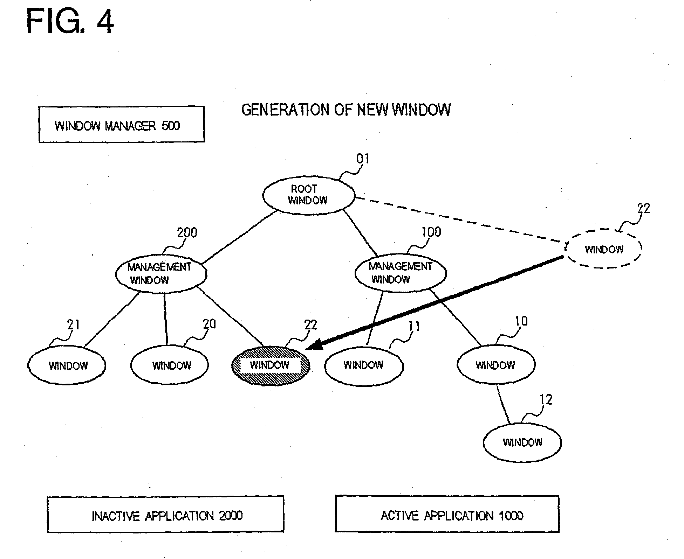

The operation of the window control system will now be explained with reference to Figs. 4 to 7.

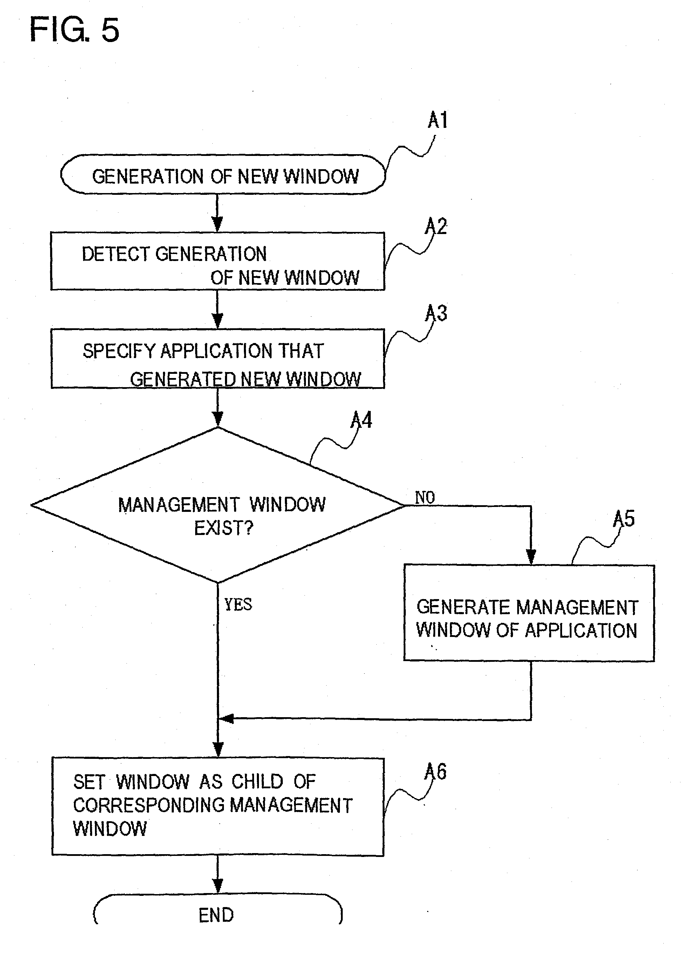

Fig. 4 shows a tree in which the inactive application 2000 generates a new window 22 (step A1 of Fig. 5). Firstly, the window generating unit 3010 ranks the window 22 as a child of the root window 01 in the window control tree.

The detecting unit 510 detects that the window 22 is newly generated (step A2), and specifies the application (in this case the inactive application 2000) that generated the window 22 (step A3). The window generating unit 3010 may send notification or a signal that indicates generation of a new window, with additional information about the application that generated the new window, to the detecting unit 510. In this case, the detecting unit 510 detects the generation of the new window by means of the notification or the signal, and the application that generated the window by means of the additional information.

The judging unit 520 then judges whether a management window for the specified application (the inactive application 2000) exists or not (step A4).

In the case of the tree shown in Fig. 4, the management window 200 of the inactive application 2000 exists. Therefore, the judging unit 520 judges that a management window for the specified application exists (YES of step A4). The window control unit 540 then moves the window 22 and ranks it as a child of the management window 200 of the inactive application 2000 (step A6).

When the judging unit 520 judges that a management window for the specified application does not exist (NO of step A4), the management window generating unit 530 generates a management window for the application (step A5) and moves the window 22 and ranks it as a child of the newly generated management window (step A6).

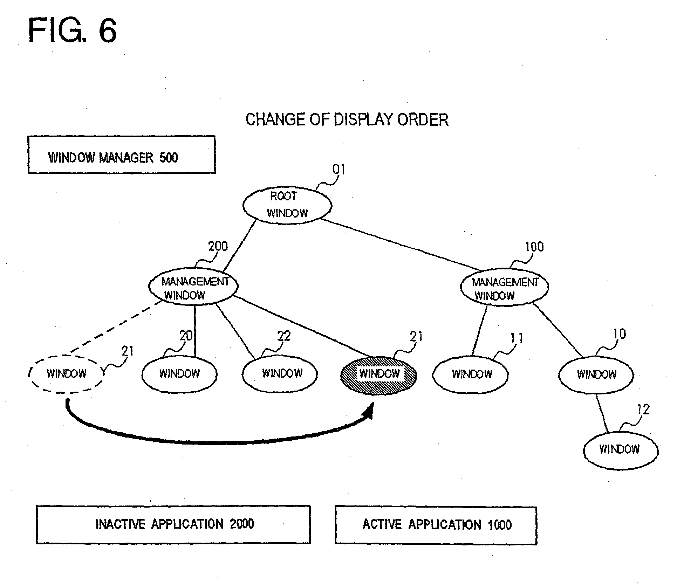

Fig. 6 shows a tree in which the inactive application 2000 has moved the window 21 which was previously at a level lower than the window 22 to a level above the window 22.

In this case, the change of the order affects only the child windows 20 and 22 of the management window 200 and the display order of the windows 21 and 22 changes. This means that the display order of the windows of the application 1000 is not affected or changed. The window manager 500 does not determine the change of the display order of the windows controlled by each application. As described above, when one of the applications generates a new window as a child of the root window, the window manager 500 only ranks the new window as a child of the management window of the application that generated the new window and does not need to determine the display order of the windows controlled by the application. Furthermore, there are no limitations on any of the applications to changing the display order of the windows independently.

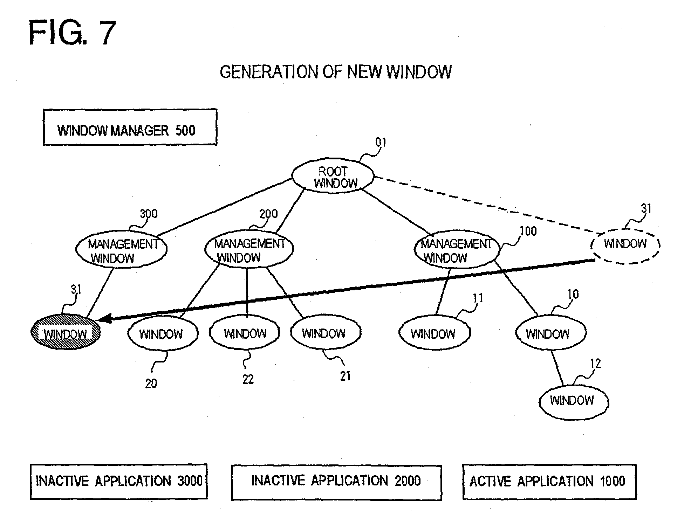

Fig. 7 shows a tree in which an inactive application 3000 generates a new window 31 as a child of the root window 01 (step A1 of Fig. 5).

The detecting unit 510 detects that the window 31 is newly generated (step A2), and specifies the application (in this case the inactive application 3000) that generated the window 31 (step A3). The judging unit 520 then judges whether a management window for the inactive application 3000 exists or not (step A4). In this case, the judging unit 520 judges that a management window for the inactive application 3000 does not exist (NO of step A4). The management window generating unit 530 then generates a new management window 300 as shown in Fig. 7 (step 5). The window control unit 540 then moves the window 31 and ranks it as a child of the management window 300 (step A6).

The operation of the window control system according to the present embodiment will be described in the following with reference to some examples.

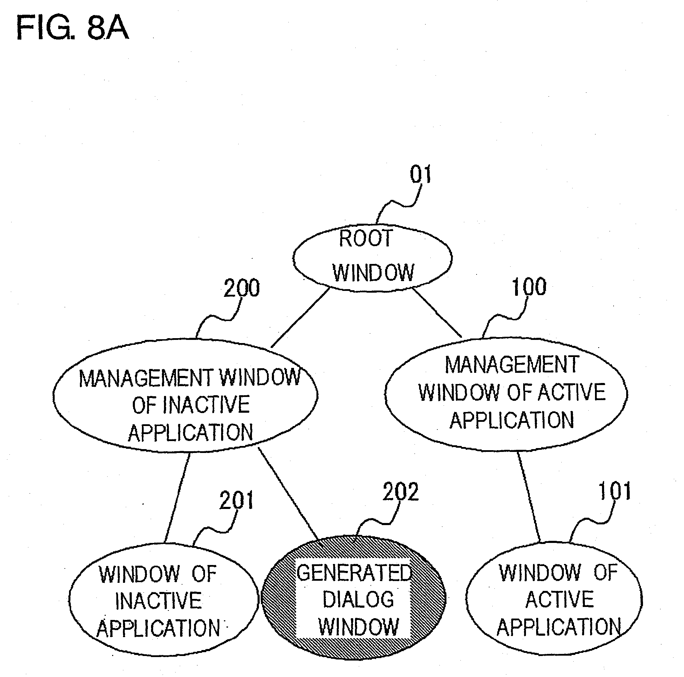

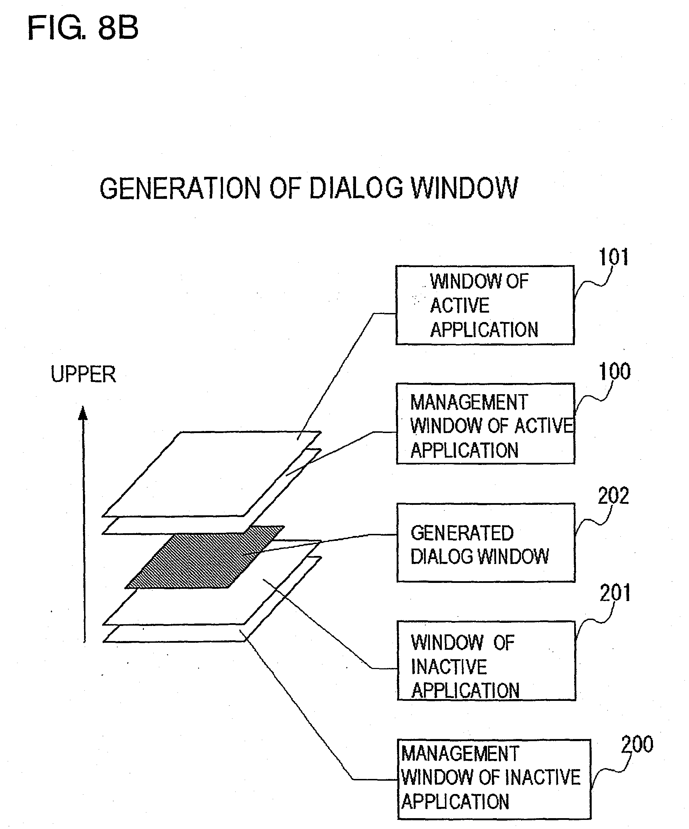

An example in which the inactive application 2000 generates a dialog window 202 as a child of the root window 01 is shown in Fig. 8, which comprises Fig. 8A and Fig. 8B.

As shown in Fig. 8, the window control unit 540 of the window manager 500 changes the order of the dialog window 202 to take precedence over the windows controlled by the management window 200 of the inactive application 2000. At this time, there is no change to the display order of the management window 100 and the management window 200. Thus, the window 101 of the active application is not affected by the generation of the dialog window 202.

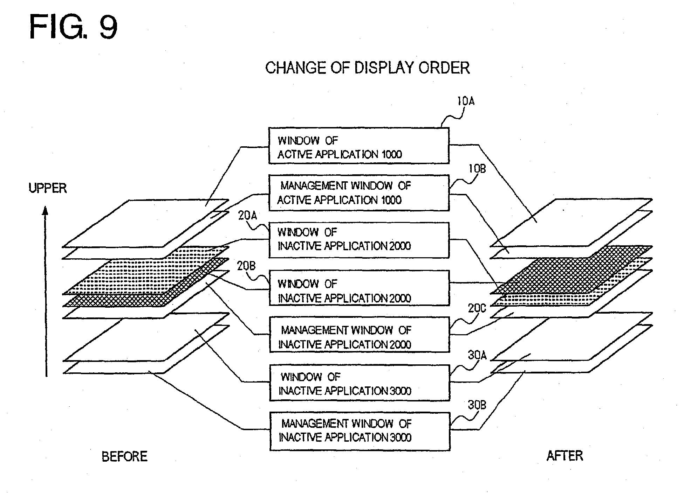

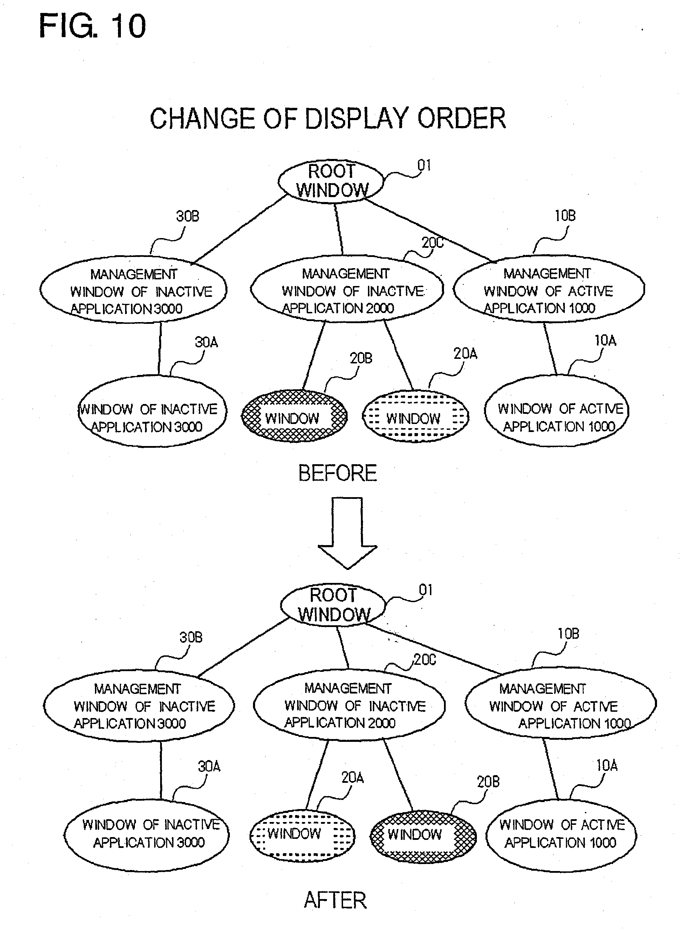

Figs. 9 and 10 show an example when the inactive application 2000 has moved the window 20B which was previously at a level lower than the window 20A to a level above the window 20A.

This change affects only the display order of the windows controlled by the inactive application 2000 and does not have any effect on the display order of the windows controlled by the active application 1000 or the inactive application 3000.

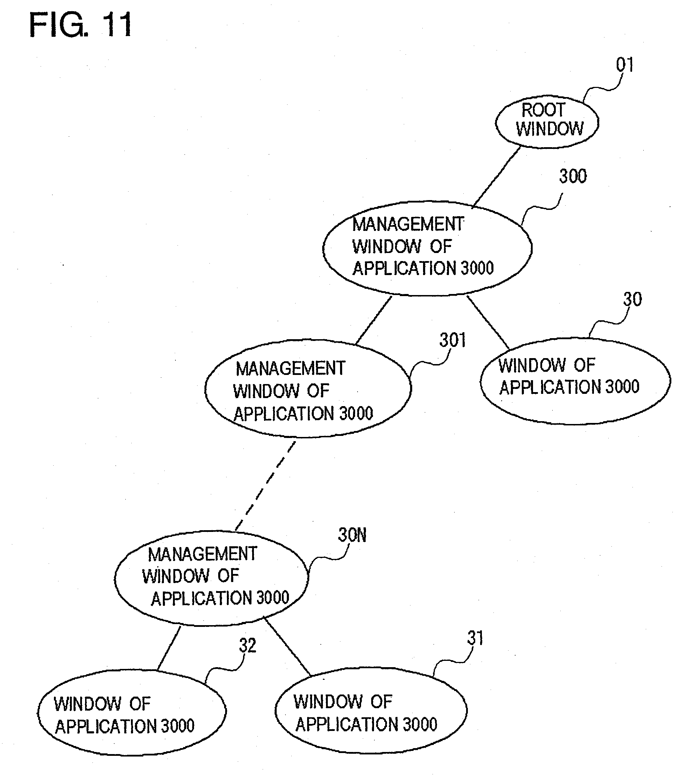

Although it is disclosed in the above embodiment that the window manager 500 generates one management window for each application, the window manager 500 may generate more than one management windows for each application, as shown in Fig. 11.

In the case shown in Fig. 11, the window manager 500 generates N management windows, 301 to 30N, for the application 3000. Each of the management windows 301 to 30N may include at least one child window. At this time, change to one of the child windows of one of the management windows does not have any effect on the child windows of other management windows.

In addition, when the window manager 500 changes a window set as a child of the root window 01 to make it a child of one of the management windows, the window manager 500 can put the window into any place below the management window.

The functions of the window manager 500 and management window according to the present system are actualized by activating a window display control program that actualizes the above functions on a computer processing apparatus. The window display control program may be stored in a storage medium such as a magnetic disk, a semiconductor memory, and the like, and actualized by being loaded on the computer processing apparatus and controlled.

With the described embodiments according to the present invention, it is easy to generate a new window or change the display order of the windows as the windows of the applications are managed by corresponding management windows. Thus, changes in the display order of the windows controlled by one of the applications does not affect the display order of the windows controlled by other applications.

Furthermore, as each of the applications generates a window as a child of the root window, thus, the window manager only detects the generation of the child window of the root window and ranks the window as a child of one of the management windows to prevent a window of an inactive application from being displayed in a position above the windows of the active application.

Although the present invention has been described by way of exemplary embodiments, it should be understood that many changes and substitutions may further be made by those skilled in the art without departing from the scope of the present invention which is defined by the appended claims.

## Claims

1. A window control system for use in a multi-application environment, comprising:
display control means (550) which displays windows of each of a number of applications in accordance with a window control tree;
management window generating means (530) which generates at least a management window for each of said applications in said window control tree; and
window control means (540) which ranks windows of said applications as descendants of said corresponding management windows in said window control tree.

2. The window control system according to claim 1 further comprising:
window generating means (3010) which generates a window for each of said applications and ranks said window as a child of a root window in said window control tree; and
judging means (520) which judges, when said window generating means generates a new window for one of said applications, whether a management window for said application exists or not;
wherein said management window generating means (530) generates a new management window for said application when said management window does not exist, and said window control means ranks said new window as a descendant of corresponding said management window of said application.

3. The window control system according to claim 1 or 2, wherein said window control means (540) ranks windows for each of the application, regardless of whether they are active or inactive, as descendants of corresponding management windows.

4. The window control system according to claim 1, 2 or 3, wherein said window control means (540) changes the display order of said management windows when the active application is changed among said plurality of applications in such a manner that a management window for the newly active application is displayed in a position above said management windows of the rest of said applications.
